# EUROPÄISCHE PATENTSCHRIFT

(11) **EP 3 891 326 B1**
(45) Veröffentlichungstag und Bekanntmachung des Hinweises auf die Patenterteilung: **28.09.2022**
(21) Anmeldenummer: 19812804.3
(22) Anmeldetag: 04.12.2019
(51) Int. Cl.: D04H 3/073, D04H 3/03, B01D 39/18

(54) **VERFAHREN UND VORRICHTUNG ZUR HERSTELLUNG VON SCHLAUCHFÖRMIGEN CELLULOSISCHEN SPINNVLIESSTOFFEN**
METHOD AND DEVICE FOR MANUFACTURING TUBULAR CELLULOSE SPUN-BONDED FABRIC
PROCÉDÉ ET DISPOSITIF DE FABRICATION DE NON TISSÉS FILÉ-LIÉ CELLULOSIQUES TUBULAIRES

(30) Priorität: 05.12.2018 EP 18210508
(43) Veröffentlichungstag der Anmeldung: 13.10.2021
(73) Patentinhaber: Lenzing Aktiengesellschaft, 4860 Lenzing (AT)
(72) Erfinder: SAGERER-FORIC, Ibrahim, 4840 Vöcklabruck (AT)
(74) Vertreter: Schwarz & Partner Patentanwälte GmbH
(86) Internationale Anmeldenummer: PCT/EP2019/083692
(87) Internationale Veröffentlichungsnummer: WO 2020/115141

(56) Entgegenhaltungen:
- WO-A1-95/09942
- WO-A1-2018/184046
- US-B1- 6 358 461

## Beschreibung

Die vorliegende Erfindung betrifft eine Vorrichtung zur Herstellung eines schlauchförmigen, cellulosischen Spinnvliesstoffes, umfassend eine Spinnmasseerzeugung, ein Spinnsystem, ein Koagulationssystem, einen Ablageabschnitt zum Ablegen und Entwässern des Spinnvlieses, eine Transportvorrichtung zum Abtransport des Spinnvlieses in Transportrichtung, ein Waschsystem und ein Trocknungssystem. Weiters betrifft die Erfindung ein Verfahren zur Herstellung eines schlauchförmigen, cellulosischen Spinnvliesstoffes und diverse Verwendungen eines solchen Spinnvliesstoffes.

### Hintergrund der Erfindung

Cellulose wird in verschiedenen Filtersystemen als Filtermedium verwendet, da es spezielle Eigenschaften aufweist und außerdem bei Temperaturen von über 80 °C verwendet werden kann. Gemäß Stand der Technik handelt es sich um gepresste und mit Klebstoff gebundene Zellstofffilterkerzen oder Vliesstoffe, die mit Cellulose bzw. Cellulose Fasern beschichtet sind und bei denen beispielsweise Phenolharze verwendet werden, um die Cellulose auf dem meist thermoplastischen Filtervlies zu binden. Folglich ist bereits die Herstellung des Filtermaterials im Vergleich zu nahtlosen Filterschläuchen und Filterkerzen sehr aufwändig. Die in US 7,081,201 und US 2010/0089819 beschriebenen Filterkartuschen bestehen aus mehreren Teilen und sind somit komplexer in der Herstellung als nahtlose Filterkerzen. Die Verwendung von Cellulose als Filtermaterial in Flüssigkeiten und Gasen erfordert bislang aufwändige Kompaktierungs- oder Beschichtungsprozesse, die Verwendung von Klebstoffen und komplexen Unterstützungsstrukturen und Apparaten. Die zur Verklebung verwendeten Harze und Klebstoffe können die Anwendungsbereiche des Filters einschränken, wenn sie nicht mit dem zu filternden Medium kompatibel sind bzw. kann es zu unerwünschten chemischen Reaktionen zwischen dem Filtermaterial und dem zu filternden Medium kommen. Bei den kompaktierten Zellstofffilterkerzen können sich auch kurze Zellstofffasern lösen und zu unerwünschten Effekten im weiteren Prozess führen. Es ist bis jetzt also nicht möglich, nahtlose Filterschläuche und Filterkerzen aus Cellulose direkt ohne Bindemittel herzustellen.

Cellulosische Fasern können beispielsweise nach dem Lyocell-Verfahren (wie z.B. in US 4,246,221, US 6,306,334 und US 5,779,737 beschrieben) hergestellt und danach über mehrere Verfahrensschritte zu Vliesstoffen verarbeitet werden. Da die Faserdurchmesser von Stapelfasern meistens über 10 µm liegen, sind die daraus hergestellten Vliesstoffe sehr porös und können nur in eingeschränkten Bereichen für Filtrationsanwendungen verwendet werden.

Die in US 6,358,461, US 8,029,259, US 8,366,988, US 6,306,334 beschrieben Verfahren zur Herstellung von Spinnvlies aus Lyocell-Spinnmasse beschäftigen sich mit der Herstellung und Nachbehandlung von zweidimensionalen Flächengebilden bzw. Vliesstoffen. Diese Vliesstoffe haben zwar die notwendige Feinheit und Porosität, um als Filtermaterial für Flüssig- und Gasfiltration verwendet werden zu können, doch müssen die Vliesstoffe auch wieder aufwändig nachbearbeitet, ggf. mit Trägervliesen verbunden, gefaltet und in Filterkartuschen eingearbeitet werden. Die bisher bekannten Vorrichtungen für die Herstellung von Lyocell-Spinnvlies können nicht für die Herstellung von Filterschläuchen oder Filterkerzen verwendet werden, da die Apparate nur für Flächenprodukte und deren Eigenschaften entwickelt wurden.

Schlauchförmige, nahtlose Spinnvliesstoffe können nur aus thermoplastischen Schmelzen mittels Meltblown-Verfahren hergestellt werden, indem - wie in US 3,905,736 dargestellt - Polymerschmelzen durch eine Meltblown-Düse extrudiert, mit Heißluft verstreckt und auf einer rotierenden Oberfläche abgelegt werden. Da die thermoplastischen Filamente noch heiß sind, entstehen bei der Ablage zwischen den einzelnen Lagen an den Berührungsstellen der Filamente Verklebungspunkte. Durch die Rotation der Ablagefläche und dem beschriebenen Verklebungseffekt, entsteht ein nahtloser Spinnvliesschlauch aus mehreren miteinander verbundenen Vliesstofflagen, der stetig abgezogen werden kann und danach zu einer Vliesbahn verarbeitet wird. In US 3,801,400 und US 3,933,557 wird die Verarbeitung zu Filterkerzen und in US 3,905,734 und US 4,032,688 zu Filterschläuchen beschrieben . WO 2018/184046 offenbart die Herstellung eines Vliesstoffs aus Lyocell-Filamenten, der als Filter verwendet wird.

Die Spinnvliesschläuche können durch eine oder durch mehrere Düsen in verschiedenen Anordnungen, wie in US 8,231,752 beschrieben, hergestellt werden. Der Filamentdurchmesser kann gemäß US 5,409,642 zwischen den einzelnen Lagen variiert werden, um die Filtrationswirkung zu verbessern. Die Herstellung der Spinnvliesschläuche kann diskontinuierlich, oder wie in US 3,933,557 beschrieben, kontinuierlich durchgeführt werden. Die bisherigen Verfahren wurden Großteils für die Herstellung von Spinnvliesschläuchen aus thermoplastischen Materialien verwendet und die Vorrichtungen wurden für diese Rohstoffe optimiert. Basierend auf den genannten Variationsmöglichkeiten können beispielsweise Filterkerzen mit hohem Abscheidegrad und hoher Filterkapazität erzeugt werden. Da für die beschriebenen Verfahren bis jetzt hauptsächlich Thermoplaste verwendet werden können, sind die Anwendungsbereiche bei höheren Temperaturen (> 80°C) begrenzt.

Da es sich bei der Herstellung von thermoplastischen, schlauchförmigen Spinnvliesstoffen um einen trockenen Spinnprozess handelt, bei dem die Verklebungen nur mittels Temperaturänderung der extrudierten Filamente eingestellt werden können, dienen die bis jetzt bekannten Vorrichtungen und Verfahren nur der Formgebung des Filterschlauches. Im Gegensatz dazu handelt es sich bei cellulosischen Spinnmassen um Cellulose-Lösungen, bei denen der Temperatureffekt nicht im gleichen Maß ausgenutzt werden kann wie bei Thermoplasten, sondern andere Wege gefunden werden müssen, um die Verklebungen zu erzeugen. Zusätzlich werden bei der Herstellung von cellulosischen Spinnvliesen Koagulationsflüssigkeiten auf die extrudieren Filamente gesprüht, wobei in weiterer Folge aus wirtschaftlichen, umwelttechnischen und sicherheitstechnischen Gründen sowohl das Koagulationsmittel, als auch das Lösungsmittel aus dem Spinnvliesschlauch und aus der Abluft entfernt und rückgewonnen werden müssen. Im Gegensatz zu den bekannten Vorrichtungen für Thermoplaste muss der cellulosische Spinnvliesschlauch auch direkt nach der Ablage entwässert, gewaschen und getrocknet werden, um die Lösungsmittelmenge im Produkt zu minimieren und die Form des erzeugten Schlauches zu stabilisieren.

### Kurzbeschreibung der Erfindung

Bislang ist es nicht möglich, nahtlose Filterschläuche und Filterkerzen direkt aus cellulosischer Spinnmasse und ohne Bindemittel herzustellen. Da die bisher bekannten Vorrichtungen und Verfahren die oben genannten Ansprüche nicht erfüllen, ist es Aufgabe der vorliegenden Erfindung, eine Vorrichtung und ein Verfahren für die Herstellung von cellulosischen Spinnvliesschläuchen bereitzustellen. Insbesondere soll die direkte Herstellung von nahtlosen, mehrlagigen, bindemittelfreien, schlauchförmigen, cellulosischen Spinnvliesstoffen, beispielsweise für einen Filter, ermöglicht werden.

Gelöst wird diese Aufgabe durch eine Vorrichtung zur Herstellung eines schlauchförmigen, cellulosischen Spinnvliesstoffes, umfassend
- eine Spinnmasseerzeugung,
- ein Spinnsystem,
- ein Koagulationssystem,
- einen Ablageabschnitt zum Ablegen und Entwässern des Spinnvlieses,
- eine Transportvorrichtung zum Abtransport des Spinnvlieses in Transportrichtung,
- ein Waschsystem und
- ein Trocknungssystem,
dadurch gekennzeichnet, dass der Ablageabschnitt rotierbar ausgebildet ist, wobei die Rotationsachse des Ablageabschnitts entlang der Transportrichtung liegt.

Weiters kann vorgesehen sein, dass dem Ablageabschnitt eine Absaugvorrichtung zugeordnet ist.

Die Absaugvorrichtung kann zumindest abschnittsweise geneigt sein, um die Dickenzunahme des Schlauchs durch abgelegte Filamente zu berücksichtigen.

Die Absaugvorrichtung kann sowohl für die Absaugung bzw. Entwässerung des Spinnvlieses, als auch für die Absaugung und Entfernung von Prozessluft verwendet werden.

In einer weiteren Ausführungsvariante können mehrere Absaugvorrichtungen - beispielsweise direkt - unterhalb des rotierbaren Ablageabschnitts, oder in einem Abstand von 1 bis 100 cm, bevorzugt 10 bis 50 cm, noch mehr bevorzugt 20 bis 40 cm angeordnet sein, um den lösungsmittelbeladenen Prozessluftstrom abzusaugen und in weiterer Folge der Lösungsmittel-Rückgewinnung zuzuführen.

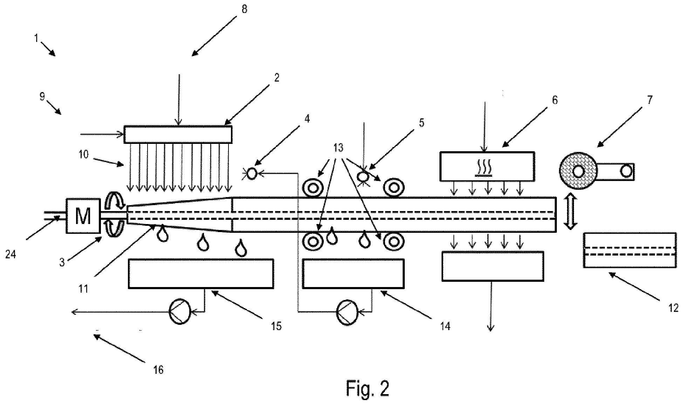

Zusätzlich kann die Vorrichtung eingehaust sein (siehe nachfolgend Fig. 2), damit die lösungsmittelbeladene Abluft innerhalb der Einhausung durch eine großflächige Absaugvorrichtung entfernt werden kann und die Kontamination des umgebenden Anlagenraumes verhindert wird.

Weiters kann eine Schneideeinheit vorgesehen sein.

Bevorzugt ist die Schneideeinheit nach dem Trocknungssystem angeordnet.

Die Aufgabe wird weiters gelöst durch ein Verfahren zum Herstellen eines vorzugsweise nahtlosen, mehrlagigen Schlauchs aus Cellulose, wobei Cellulose zu einer Spinnmasse verarbeitet und anschließend mit einem Spinnsystem zu Filamenten extrudiert und mittels Heißluft verstreckt wird, wobei die verstreckten Filamente vor der Ablage mit einer Koagulationsflüssigkeit so benetzt werden, dass sich stellenweise Verklebungen zwischen den verstreckten Filamenten bilden, wobei anschließend die verstreckten und stellenweise verklebten Filamente auf eine rotierende Ablage abgelegt werden und wobei mittels Koagulationsflüssigkeit weitere Verklebungen mit den bereits auf der rotierenden Ablage befindlichen Filamenten gebildet werden.

Es hat sich gezeigt, dass der Grad der Verklebung gezielt durch die Koagulation (Koagulationsflüssigkeitsmenge, Temperatur, Konzentration, Oberfläche des Flüssigkeitsnebels), also die Regeneration der Cellulose, beeinflusst werden kann. Dabei wird das Verschmelzen von mehreren Einzelfilamenten bei ihren Berührungspunkten als Verklebung bezeichnet. Die Filamente werden vor dem Auftreffen auf der Ablage nur soweit mit der Koagulationsflüssigkeit benetzt, dass sie teilweise noch flüssig bleiben und bei Berührung miteinander verschmelzen und somit eine Verklebung entsteht. Überaschenderweise konnte der Verklebungseffekt so eingestellt werden, dass die Verklebungen nicht nur im Flug, also in einer Spinnvlieslage, sondern auch beim Auftreffen, zwischen bereits abgelegten und gerade auftreffenden Filamenten erzeugt werden konnte und somit ein über mehrere Lagen verklebter, nasser aber formstabiler Schlauch entstand. Erfindungsgemäß wird im Extremfall keine Koagulationsflüssigkeit aufgetragen und dadurch ein Maximum an Verklebungen erzeugt. Dabei können die Verklebungen beispielsweise kugelförmig oder auch flach sein und Durchmesser von 10 µm bis 500 µm, bevorzugt 30 µm bis 300 µm, noch mehr bevorzugt 50 bis 200 µm aufweisen. Die Koagulationsflüssigkeit kann entweder direkt in die Prozessluft eingespritzt werden oder über verschiedenste Sprüh- und Zerstäubungssysteme auf den Filamentvorhang gesprüht werden. Als Koagulationsflüssigkeit können Wasser und verschiedenste Lösungsmittel-Gemische, wie beispielsweise NMMO/Wasser-Gemisch (*N*-Methylmorpholin-*N*-oxid) verwendet werden. Die Konzentration von NMMO kann in der Koagulationsflüssigkeit, kann zwischen 0-45%, bevorzugt 10 bis 40%, noch mehr bevorzugt zwischen 20 und 30% liegen. Die Temperatur der Koagulationsflüssigkeit kann zwischen 5°C und 90°C, bevorzugt zwischen 10°C und 70°C, noch mehr bevorzugt zwischen 20°C und 60°C liegen.

Ein Aspekt der Erfindung betrifft einen nahtlosen cellulosischen Schlauch, bestehend aus mehreren Lagen verstreckter und stellenweise verklebter Filamente. Sowohl die Anzahl als auch die Größe der Verklebungsstellen kann parallel oder unabhängig voneinander über alle Lagen annähernd konstant sein, von außen nach innen zunehmen, von außen nach innen abnehmen, oder mehrmals innerhalb eines Schlauches variiert werden. Bspw. kann sowohl die Anzahl der Verklebungen von außen nach innen zunehmen, beim halben Durchmesser des Schlauches ein Maximum erreichen um dann wieder abzunehmen. Durch die genannte Variation können die Festigkeit und die Luftdurchlässigkeit des Schlaues für die jeweilige Anwendung angepasst werden. Der nahtlose cellulosische Schlauch kann frei von Bindemitteln sein.

Ein Aspekt der Erfindung betrifft einen nahtlosen cellulosischen Schlauch, bestehend aus mehreren Lagen verstreckter und stellenweise verklebter Filamente. Sowohl die Anzahl als auch der mittlere Durchmesser der Filamente kann parallel oder unabhängig von einander über alle Lagen annähernd konstant sein, von außen nach innen zunehmen, von außen nach innen abnehmen, oder mehrmals innerhalb eines Schlauches variiert werden. Bspw. kann der mittlere Filamentdurchmesser der Filamente von außen nach innen abnehmen, beim halben Durchmesser des Schlauches ein Minimum erreichen um dann wieder zunehmen. Auch hier kann durch die genannte Variation die Aufnahmekapazität, der Trenngrad und die Luftdurchlässigkeit eines Filters für die jeweilige Anwendung angepasst werden.

Ein Aspekt der Erfindung betrifft einen nahtlosen Schlauch aus cellulosischen und thermoplastischen Spinnvlies, mit den oben genannten Variationsmöglichkeiten.

Ein Aspekt der Erfindung betrifft einen nahtlosen teilweise oder völlig carbonisierten bzw. aktivierten Schlauch aus cellulosischem Spinnvlies. Mit den oben genannten Variationsmöglichkeiten.

Ein Aspekt der Erfindung betrifft einen Filter, umfassend einen Schlauch.

Schließlich betrifft die Erfindung die Verwendung des Filters zur Adsorption, der chemischen Bindung oder der Absorption von Substanzen aus Gasen, Flüssigkeiten und Emulsionen, zum Trennen von Emulsionen, zum Entstauben von Abgasen, als Tropfenabscheiden, zur Entfärbung von Flüssigkeiten, zur Desinfektion von Gasen und Flüssigkeiten, zur Trinkwasseraufarbeitung, zur Wasserenthärtung, zum Abscheiden von Öl aus Gasen, zum Trennen von Emulsionen, zur Desodorisation in der Lebensmittelindustrie, in der chemischen Industrie, in der Pharmaindustrie, in der Automotivindustrie, in der Elektroindustrie, in der Erdölindustrie, in der Petrochemie, in der Kosmetikindustrie.

Die Erfindung betrifft ein Verfahren für die direkte Herstellung von nahtlosen, mehrlagigen, schlauchförmigen, cellulosischen Spinnvliesstoffen, die aufgrund der hohen Variationsmöglichkeiten der Lagenanzahl, der Verklebungsstellen, der Filamentdurchmesser, des Schlauchdurchmessers- und der Länge des Schlauches, ideal für verschiedenste Anwendungen, insbesondere für Filtrationsanwendungen angepasst werden können.

### Detaillierte Beschreibung der Erfindung

Um die Erfindung besser zu veranschaulichen werden die wesentlichen Merkmale anhand von bevorzugten Ausführungsformen der erfindungsgemäßen Vorrichtung in folgenden Figuren dargestellt:
- Fig. 1: zeigt ein Blockschema des erfindungsgemäßen Verfahrens.
- Fig. 2: zeigt schematisch eine erfindungsgemäße Vorrichtung für die Herstellung von Filterkerzen in einer Seitenansicht.
- Fig. 3: zeigt schematisch eine erfindungsgemäße Vorrichtung für die Herstellung von Filterschläuchen in einer Seitenansicht.
- Fig. 4a, 4b: zeigen schematisch den rotierenden Ablageabschnitt in perspektivischer Darstellung und in Frontansicht.
- Fig. 5: zeigt eine erfindungsgemäße Vorrichtung in Seitenansicht, für die kontinuierliche Herstellung eines cellulosischen Spinnvliesschlauches ohne Wickelkern.
- Fig. 6: zeigt eine erfindungsgemäße Vorrichtung in Seitenansicht, für die kontinuierliche Herstellung eines cellulosischen Spinnvliesschlauches mit Wickelkern.
- Fig. 7: zeigt eine erfindungsgemäße Vorrichtung in Seitenansicht, für die diskontinuierliche Herstellung eines cellulosischen Spinnvliesschlauches mit Wickelkern.
- Fig. 8: zeigt schematisch ein Spinnvliesschlauch-Stück bzw. eine Filterkerze.
- Fig. 9: zeigt eine Spinnvlieslage mit vielen verklebten Flächen und den dazwischenliegenden offenen Poren.
- Fig. 10: zeigt eine Spinnvlieslage mit wenigen Verklebungen.

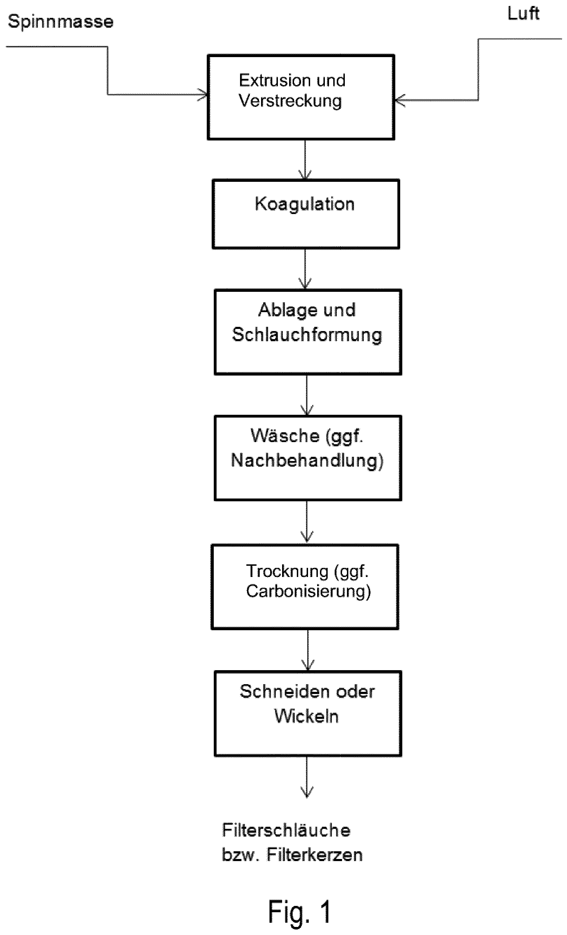

Fig. 1 zeigt ein Blockschema des erfindungsgemäßen Verfahrens, bei dem cellulosische Spinnmasse durch eine Meltblown-Düse zu feinen Filamenten extrudiert und mittels Heißluft verstreckt wird. Erfindungsgemäß werden die verstreckten Filamente noch vor der Ablage auf einem rotierenden Zylinder nur soweit mit Koagulationsflüssigkeit benetzt, dass sich Verklebungen zwischen den einzelnen Filamenten und den einzelnen Lagen des erzeugten Spinnvlies-Schlauches bilden. Es hat sich gezeigt, dass diese Verklebungen dem SpinnvliesSchlauch nach der Wäsche und Trocknung ausreichend Stabilität geben, um abschließend aufgewickelt oder in einzelne Schlauchstücke geschnitten werden zu können. Die Zugabe von Bindemitteln war also nicht notwendig, da die Verklebungen der einzelnen Filamente zwischen mehreren Lagen und die ausgeprägten Wasserstoffbrückenbindungen der Cellulose, nach der Trocknung, dem erzeugten Spinnvliesschlauch Lagenübergreifend genügend Stabilität und Zusammenhalt geben, um beispielsweise in verschiedenen Filtrationsbereichen eingesetzt werden zu können.

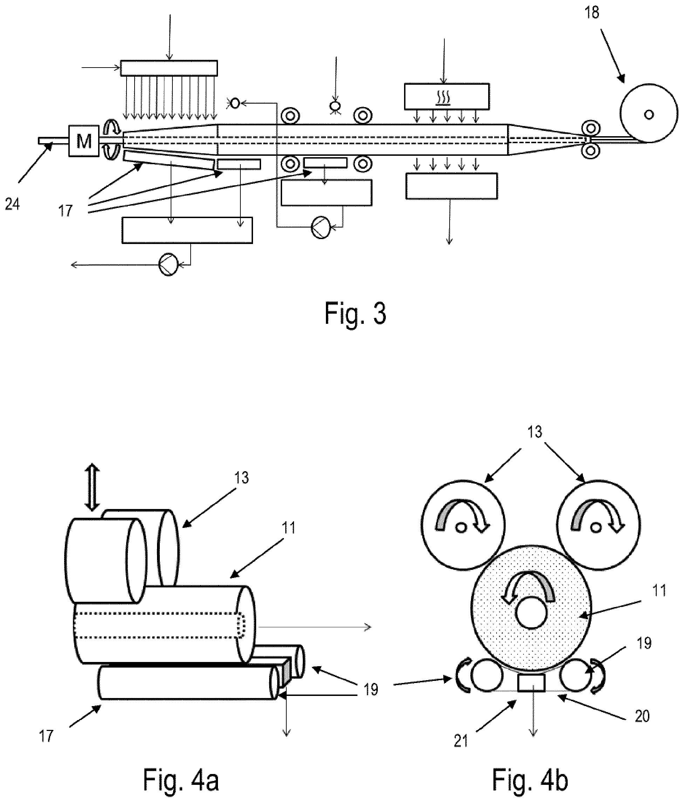

Für die Durchführung des erfindungsgemäßen Verfahrens und der Herstellung von Filterkerzen kann die in Fig. 2 beschriebene erfindungsgemäße Vorrichtung 1 verwendet werden. Die erfindungsgemäße Vorrichtung 1 umfasst eine Spinnmasseerzeugung 8, ein Spinnsystem 2, und einen Ablageabschnitt 3 zum Ablegen des Spinnvlieses, ein Koagulationssystem 4, ein Waschsystem 5 (bzw. Nachbehandlung), ein Trocknungssystem 6 (ggf. zur Carbonisierung und Aktivierung) 6, eine Schneideeinheit 7 und eine Heißluftzuführung 9. Mit der erfindungsgemäßen Vorrichtung 1 können die Filamente 10 extrudiert, verstreckt, koaguliert und auf der rotierenden Ablageabschnitt 3 zum Ablegen des Spinnvlieses zu einem Spinnvliesschlauch 11 geformt werden. Nach dem Waschsystem 5 und dem Trocknungssystem 6 kann der kontinuierlich hergestellte Spinnvliesschlauch entweder zu Filterkerzen 12 oder wie in Fig. 3 gezeigt zu Filterschläuchen 18 aufgewickelt werden. Die Vorrichtung gemäß Fig. 3 ist im Wesentlichen gleich aufgebaut wie die Vorrichtung von Fig. 2 mit dem Unterschied in der Aufwickelung.

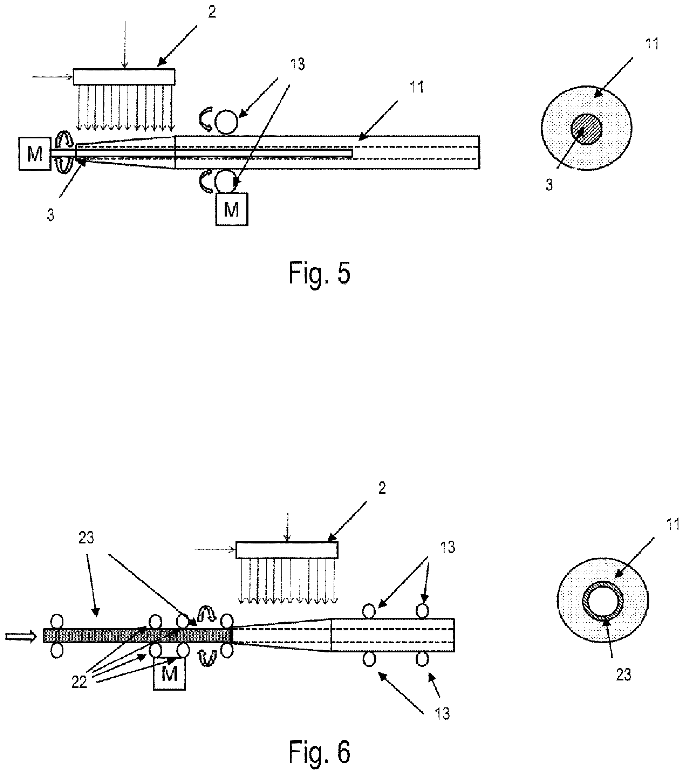

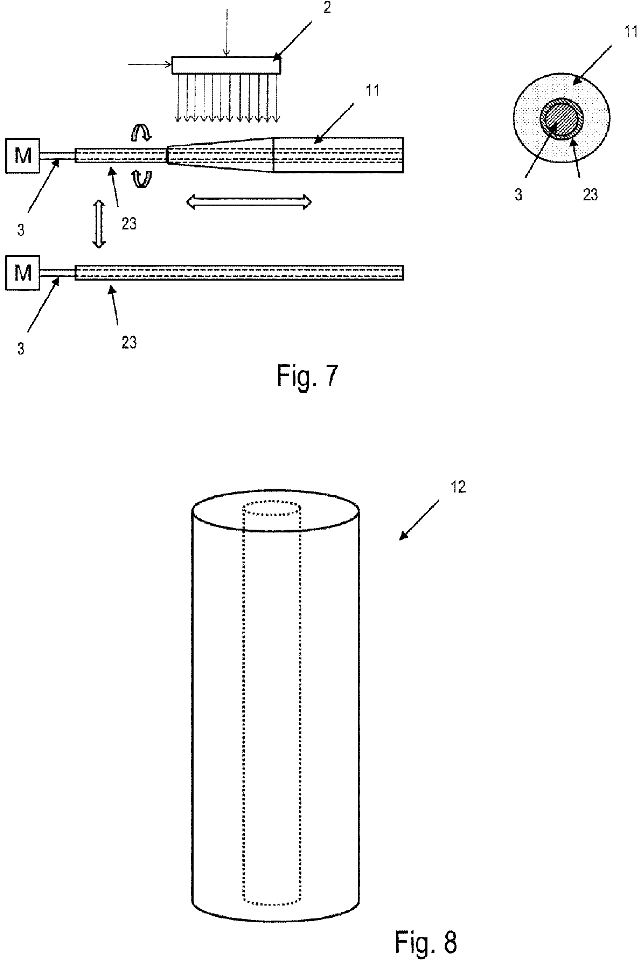

Die kontinuierliche Herstellung des erfindungsgemäßen Produktes ohne Kern kann, wie in Fig. 5 dargestellt, mittels angetriebenen Abzugswalzen 13 ermöglicht werden. Wenn die rotierende Ablageabschnitt 3 eine blanke polierte Welle ist, wird der Filterschlauch durch die Abzugswalzen 13 von der Welle gezogen und die Linearbewegung des rotierenden Schlauches unter der Düse wird ermöglicht. Die rotierende Ablageabschnitt 3 kann auch zumindest einen spiralförmigen Gewindegang an der Oberfläche von vorne bis hinten aufweisen. Durch die Reibung des in Fig. 3 gezeigten Spinnvliesschlauches an der Außenfläche mit der Absaugeinheit 17 und der Reibung mit dem rotierenden, spiralförmigen Gewindegang im inneren des Schlauches, wird der Schlauch gleichmäßig in Richtung Waschsystem 5 gefördert (ähnlich dem Förderprinzip bei einer Förderschnecke oder einen Extruder). Alternativ dazu können aber auch, wie in Fig. 6 gezeigt, Kerne 23 für die Spinnvliesablage verwendet werden, um Filterkerzen zu erzeugen. Dabei werden perforierte Wickelkerne 23 stückweise zugeführt, verbunden und über Antriebswalzen 22 kontinuierlich weiter transportiert. Eine weitere Variante ist auch die in Fig. 7 dargestellte diskontinuierliche Produktion mit Wickelkern 23. Dabei werden die Filamente abwechselnd auf zwei rotierende Ablageabschnitte 3 zum Ablegen des Spinnvlieses gesprüht. Während der Ablageabschnitt 3 zum Ablegen des Spinnvlieses unter der Düse des Spinnsystems 2 besprüht wird, wird der Spinnvliesschlauch 11, samt Kern 23, von einem zweiten Ablageabschnitt 3 zum Ablegen des Spinnvlieses abgezogen und mit einem leeren Kern 23 bestückt. Der Spinnvliesschlauch wird danach gewaschen (ggf. mit Chemikalien nachbehandelt), getrocknet (ggf. carbonisiert und aktiviert) und beispielsweise zu Filterkerzen 12 verarbeitet bzw. geschnitten. Es hat sich gezeigt, dass mit der vorliegenden Vorrichtung und Variationen der bevorzugten Ausführung nahtlose, mehrlagige, cellulosische Filterschläuche bzw. Filterkerzen mit und ohne Kern hergestellt werden können.

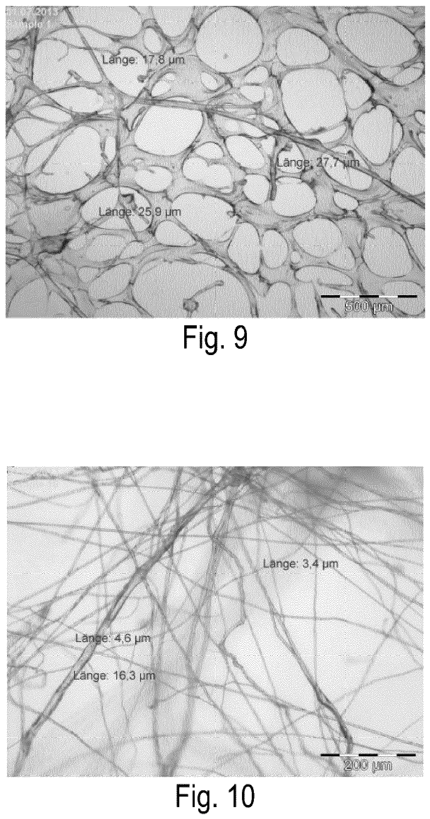

Fig. 8 zeigt schematisch eine Filterkerze mit dem Hohlraum in der Mitte und dem umliegenden Spinnvlieslagen. Da das Spinnvlies 11 während der Besprühung mit den Filamenten 10 bewegt wird, werden die Lagen entlang der Bewegung unter dem Spinnsystem 2 nach und nach aufgebaut. Dabei kann ein Spinnsystem 2 verwendet werden, oder mehrere Spinnsysteme 2, mit gleichen oder unterschiedlichen Filamentdurchmessern. Es hat sich gezeigt, dass die Verklebungen je Spinnsystem variiert werden können und dadurch Filtermaterialien mit unterschiedlichen Lagen, Filamentdurchmessern, Porengrößen und dadurch unterschiedlichsten Filtrationseigenschaften hergestellt werden können. Fig. 9 zeigt eine Spinnvlieslagen mit vielen Verklebungen, während das Spinnvlies in Fig. 10 viele einzelne Filamente aufweist. Es ist auch möglich zusätzliche Spinnsysteme 2 mit nicht cellulosischer Spinnmasse, beispielsweise thermoplastischen Schmelzen, zu verwenden, um schlauchförmige Produkte mit cellulosischen und nicht cellulosischen Lagen zu erzeugen und dadurch die Eigenschaften des schlauchförmigen Produktes zu beeinflussen.

Das erfindungsgemäße Produkt umfasst u.a. einen nahtlosen, mehrlagigen Filterschlauch aus Cellulose, der beispielsweise zu Filterkerzen und Filterschläuchen verarbeitet werden kann. Dabei kann das erfindungsgemäße Produkt auch nicht cellulosische Lagen enthalten, chemisch nachbehandelt bzw. funktionalisiert sein, Additive enthalten, um die Filtrationsleistung zu erhöhen, die Flammfestigkeit zu erhöhen, Ionenaustausch zu ermöglichen und die chemische Beständigkeit gegen das Filtrationsmedium zu erhöhen. Zusätzlich kann der Filterschlauch teilweise, oder gänzlich carbonisiert und/oder aktiviert sein, um die Oberflächenaktivitiät und die Adsorptionseigenschaften zu erhöhen. Das erfindungsgemäße Produkt kann beispielsweise für Filtration, Abscheidung, Ionentausch, Desinfektion von Flüssigkeiten und Gasen, Trennung von Emulsionen, Öl-Abscheidung und andere dem Fachmann bekannten Anwendungen für Filterschläuche und Filterkerzen verwendet werden.

Für das erfindungsgemäße Verfahren können verschiedenste Zellstoffe, Lösungsmittel und daraus hergestellte cellulosische Spinnmassen verwendet werden. Als Spinnmasse wird ein Mehrstoffsystem bezeichnet, bei dem Cellulose durch ein geeignetes Lösungsmittel, beispielsweise ionische Flüssigkeiten, bevorzugt tertiäre Aminoxide, noch mehr bevorzugt NMMO/Wasser-Gemisch, in Lösung gebracht und somit extrudierbar und spinnbar wird. Der Zellstoffgehalt im Fall einer Lyocell-Spinnmasse kann dabei zwischen 4 und 15%, bevorzugt zwischen 6% und 14%, noch mehr bevorzugt zwischen 7% und 13% liegen. Die Temperatur kann im Fall der Lyocell-Spinnmasse zwischen 80 °C und 160 °C, bevorzugt 90 °C und 150 °C, noch mehr bevorzugt zwischen 100 °C und 140 °C liegen.

Es hat sich gezeigt, dass die Spinnmasse sowohl durch einreihige, als auch durch mehrreihige Meltblown-Düsen (Spinnsystem 2) extrudiert und verstreckt werden kann. Es können mehrere nacheinander geschaltete Spinnsysteme 2 verwendet werden, um Lagen mit unterschiedlichen Filamentdurchmesser zu erzeugen. Wenn nur ein Spinnsystem 2 verwendet wird, kann die Extrusionslochgeometrie von einer Seite der Düse bis zur anderen Seite der Düse sowohl in der Größe, als auch in der Geometrie variieren (bspw. größer werden entlang der Düse; Löcher am Anfang sind kreisrund und am Ende Y-Förmig), um feine Filamente in den inneren Lagen und grobe Filamente in den äußeren Lagen zu, oder kreisrunde Filamente innen und Hohlfasern außen zu erzeugen. Weitere Kombinationen von Größe, Gradient und Geometie sind je nach gewünschten Produkteigenschaften möglich. Dabei tritt die heiße Prozessluft je nach Düsendesign aus einem Spalt oder aus einem Loch, neben bzw. rund um die Extrusionsöffhungen aus und reißt die Spinnmassefilamente mit. Das Filament wird beschleunigt und der Durchmesser wird verringert. In weiterer Folge werden die Filamente durch die Turbulenz der Prozessluft verwirbelt und können als Spinnvlies auf einer rotierenden Oberfläche abgelegt werden. Die Düsenlänge kann zwischen 50 mm und 2000 mm, bevorzugt 100 mm und 1000 mm, noch mehr bevorzugt zwischen 200 mm und 500 mm betragen. Der Cellulosedurchsatz kann zwischen 1 kg/h/m und 500 kg/h/m Düsenlänge, bevorzugt zwischen 15 kg/h/m und 250 kg/h/m, noch mehr bevorzugt zwischen 20 kg/h/m und 100 kg/h/m liegen. Die Extrusionslöcher der Düse können zwischen 0,05 mm und 3 mm, bevorzugt zwischen 0,2 mm und 1 mm, noch mehr bevorzugt zwischen 0,3 mm und 0,6 mm liegen. Der Zellstoffdurchsatz pro Extrusionsloch kann zwischen 0,001 g/Loch/min und 30 g/Loch/min, bevorzugt 0,1 g/Loch/min und 20 g/Loch/min, noch mehr bevorzugt zwischen 1 g/Loch/min und 10 g/Loch/min liegen. Bei einreihigen Spaltdüsen, kann die Luftspaltbreite zwischen 0,5 mm und 5 mm, bevorzugt 1 mm und 3 mm, noch mehr bevorzugt 1,5 mm und 2 mm liegen. Bei mehrreihigen Düsen kann der Luftaustrittsdurchmesser zwischen 0,5 mm und 5 mm, bevorzugt 1 mm und 3 mm, noch mehr bevorzugt 1,5 mm und 2mm liegen. Die verwendeten Prozessluftüberdrücke können zwischen 0,1 bar und 10 bar, bevorzugt 0,3 bar und 5 bar, noch mehr bevorzugt 0,5 bar und 2 bar liegen. Dabei ergeben sich Luftaustrittsgeschwindigkeiten in 20 mm Düsenentfernung von 50 m/s bis 300 m/s, bevorzugt 70 m/s bis 250 m/s, noch mehr bevorzugt 100 m/s bis 200 m/s. Bei einem Abstand zwischen Düse und rotierender Ablage von 50 mm bis 1000 mm, bevorzugt 200 mm bis 800 mm, noch mehr bevorzugt 300 mm bis 600 mm ergeben sich Einzelfaserdurchmessern von 0,1 µm bis 100 µm, bevorzugt 0,5 µm bis 50 µm, noch mehr bevorzugt zwischen 1 µm bis 30 µm.

Es hat sich gezeigt, dass der Grad der Verklebung gezielt durch die Koagulation, also die Regeneration der Cellulose, beeinflusst werden kann. Dabei wird das Verschmelzen von mehreren Einzelfilamenten bei ihren Berührungspunkten als Verklebung bezeichnet. Die Filamente werden vor dem Auftreffen auf der Ablage nur soweit mit der Koagulationsflüssigkeit benetzt, dass sie teilweise noch flüssig bleiben und bei Berührung miteinander verschmelzen und somit eine Verklebung entsteht. Erfindungsgemäß wird im Extremfall keine Koagulationsflüssigkeit aufgetragen und dadurch ein Maximum an Verklebungen erzeugt. Dabei können die Verklebungen beispielsweise kugelförmig oder auch flach sein und Durchmesser von 10 µm bis 500 µm, bevorzugt 30 µm bis 300 µm, noch mehr bevorzugt 50 bis 200 µm haben. Die Koagulationsflüssigkeit kann entweder direkt in die Prozessluft eingespritzt werden, oder über verschiedenste Sprüh- und Zerstäubungssysteme auf den Filamentvorhang gesprüht werden. Als Koagulationsflüssigkeit können Wasser und verschiedenste Lösungsmittel-Gemische, wie beispielsweise NMMO/Wasser-Gemisch verwendet werden. Die Konzentration von NMMO kann in der Koagulationsflüssigkeit, kann zwischen 0-45%, bevorzugt 10 bis 40%, noch mehr bevorzugt zwischen 20 und 30% liegen. Die Temperatur der Koagulationsflüssigkeit kann zwischen 5 °C und 90 °C, bevorzugt zwischen 10 °C und 70 °C, noch mehr bevorzugt zwischen 20 °C und 60 °C liegen.

Nach der Koagulation werden die Filamente auf einem rotierenden Ablageabschnitt 3 zum Ablegen des Spinnvlieses abgelegt. Der rotierende Ablageabschnitt 3 zum Ablegen des Spinnvlieses kann wie eine angetriebene Welle bzw. ein Dorn aus Metall sein. Der Durchmesser der rotierenden Ablage kann zwischen 1 cm und 100 cm, bevorzugt zwischen 1,5 cm und 50 cm, noch mehr bevorzugt zwischen 2 cm und 30 cm sein. Je nach Düsenlänge kann die rotierende Ablage für eine kontinuierliche Produktion ohne Kern (Fig. 5) 25 bis 500 cm, bevorzugt 50 bis 400 cm, noch mehr bevorzugt, 100 bis 300 cm lang sein. Bei kontinuierlicher Produktion mit Kern, wie in Fig. 6 gezeigt, werden die Wickelkerne als rotierende Ablage verwendet. In beiden Fällen können für die kontinuierliche Produktion Antriebswalzen 22 und Abzugswalzen 13 verwendet werden, um die Linearbewegung des Spinnvliesschlauches entlang der Düsenlänge zu ermöglichen. Bei der in Fig. 7 gezeigten diskontinuierlichen Produktion, wird die gesamte rotierende Ablage unter dem Spinnsystem bewegt, um den Kern mit Spinnvlieslagen zu beladen. Wenn ein Kern beschichtet ist, wird er von der Düse weggezogen und durch einen neuen Kern ersetzt. Dieser wird dann wieder linear entlang der Düse verschoben, bis ein Spinnvliesschlauch entsteht. In allen drei Fällen ist die Linearbewegung der rotierenden Ablage 3 unter dem Spinnsystem 2 dafür verantwortlich, dass der Spinnvliesschlauch von innen nach außen aufgebaut wird. Deshalb führt eine Variation der Filamentfeinheit entlang der Spinndüse dazu, dass die Porosität bzw. Luftdurchlässigkeit der verschiedenen Lagen variiert werden kann. Diese Art der Produktvariation ist spezielle für Filtrationsanwendungen wünschenswert. Der Filterschlauch besteht zumindest aus einer Lage. Es hat sich gezeigt, dass die Anzahl der Lagen und damit die Dicke des hergestellten Filterschlauches je nach Anwendung variiert werden kann, indem entweder der Durchsatz durch die Düse, die Rotationsgeschwindigkeit der rotierenden Ablage 3 oder die Abzugsgeschwindigkeit der Antriebs- bzw. Abzugswalzen angepasst wird.

Erfindungsgemäß kann die Ablage noch beeinflusst werden, indem als rotierende Ablage ein perforiertes Rohr verwendet wird, das unter Vakuum 24 gesetzt wird. Dabei werden die Filamente gezielt angesaugt und gleichzeitig entwässert. Die überschüssige Koagulationsflüssigkeit kann entweder, wie in Fig. 2 gezeigt abgetropft und mit Auffangwannen aufgefangen werden, oder aktiv über die in Fig. 4a gezeigte Absaugeinheit entfernt werden. Der in Fig. 4a dargestellte rotierbare Ablageabschnitt 13 weist eine Absaugeinheit auf, die für das Entfernen der Koagulationsflüssigkeit, der Prozessluft und der Waschflüssigkeit in der Wäsche verwendet werden kann. Dabei wird der Spinnvliesschlauch durch Rollen 19 und/oder, wie in Fig. 4a dargestellt durch ein Förderband 20 gestützt. Die Rollen 19 bzw. das Förderband 20 drehen sich dabei in derselben Geschwindigkeit wie die rotierende Ablage 3 bzw. Spinnvliesschlauch 11. Zwischen den Rollen 19 und unter dem Förderband 20, befindet sich eine Absaugeinheit 21. Mit der Absaugeinheit wird der Spinnvliesschlauch entwässert. Der Entwässerungseffekt, kann wie in Fig. 4b dargestellt, durch die Abzugswalzen 13, die in dem Fall als Presswalzen dienen, verstärkt werden. Der Feuchtegehalt kann durch die Entwässerungseinheit auf bis zu 30% reduziert werden. Wie in Fig. 3 dargestellt, gelangen die Flüssigkeiten aus den Entwässerungsboxen entweder in den Koagulationsbehälter 15 oder in den Waschanlagenbehälter 14. Die Flüssigkeit aus dem Koagulationsbehälter 15 wird der Lösungsmittelrückgewinnung zugeführt, während die Flüssigkeit aus dem Waschanlagenbehälter für das Koagulationssytem 4 verwendet werden kann.

Der Spinnvliesschlauch gelangt nach der Vliesformung in die Wäsche. Dabei wird das restliche Lösungsmittel aus dem Spinnvliesschlauch entfernt. Der Spinnvliesschlauch kann dabei entweder durch ein Becken bzw. Bad, unter Sprühdüsen, oder andere Berieselungen geführt werden, bei denen im Gegenstrom Wasser zugeführt und Lösungsmittel abgeführt wird, oder durch mehrere hintereinander geschaltete Stufen, bei denen im Gegenstrom beispielsweise Wasser auf den Spinnvliesschlauch gesprüht wird und entweder abtropft, oder durch die Absaugeinheit 17 entfernt wird. Die Wäsche kann aus mehreren Waschstufen bestehen, bei denen die Gegenstromextraktion solange wiederholt wird, bis die gewünschte Reinheit erreicht ist. Die Temperatur der Waschflüssigkeit kann zwischen 20 und 90°C, bevorzugt zwischen 30 und 85°C, noch mehr bevorzugt zwischen 40 und 80°C liegen. Für die verschiedenen Waschstufen kann die Temperatur auch variiert werden. Beispielsweise kann die erste Waschstufe wärmer sein, als die letzte. Basierend auf dem Gegenstromprinzip der Wäsche nimmt die Konzentration des Lösungsmittels im Spinnvliesschlauch ab, während das Waschwasser aufkonzentriert wird. Das aufkonzentrierte Waschwasser kann dann für die Koagulation verwendet werden. In der Wäsche können die Eigenschaften des Spinnvliesschlauches durch die Zugabe von Chemikalien beeinflusst werden, um beispielsweise die Temperaturbeständigkeit, Chemikalienbeständigkeit, die Formstabilität und die Filtrationsleistung durch Funktionelle Gruppen zu erhöhen. Weiters können auch Desinfektionsmittel und Flammschutz-Imprägnierungsmittel zugeführt werden (Chemische Nachbehandlung).

Nach der Wäsche muss der Spinnvliesschlauch 11 noch getrocknet werden. Dabei können Durchströmungstrockner (Konvektionstrockner), Strahlungstrockner (IR, UV, Mikrowelle) aber auch Kontaktrockner mit beheizten Walzen verwendet werden. Der Feuchtegehalt wird dabei auf 2 bis 14%, bevorzugt 4 bis 12%, noch mehr bevorzugt 6 bis 10% reduziert. Es hat sich gezeigt, dass die Spinnvliesschläuche nach entsprechender Imprägnierung in der Wäsche, auch teilweise oder gänzlich carbonisiert und/oder aktiviert werden können. Dadurch werden die spezifische Oberfläche des Produktes, die Absorptions- und die Adsorptionseigenschaften deutlich erhöht.

Bei kontinuierliche Produktion kann der Spinnvliesschlauch entweder zu kleineren Einheiten geschnitten (Fig. 2) oder als Schlauchrolle aufgewickelt werden (Fig. 3)

Die beschriebene Wäsche (chemische Nachbehandlung) und Trocknung (bzw. Carbonisierung) wird bei diskontinuierlicher Produktion, chargenmäßig durgeführt.

Das hergestellte Produkt kann als reiner Cellulose-Spinnvliesschlauch, als Cellulose/Thermoplast-Spinnvliesschlauch, als carbonisierter Spinnvliesschlauch, als aktivierter Spinnvliesschlauch, chemisch Nachbehandelt um die Flammfestigkeit und Temperaturstabiltität zu erhöhen und die Adsorption, die chemische Bindung und die Absorption von Substanzen aus Gasen, Flüssigkeiten und Emulsionen zu verbessern, beispielsweise als Filtertuch, Filterkerze, Filterschlauch, Beutelfilter, zum Abscheiden von Feststoff aus Gasen und Flüssigkeiten, zum Abscheiden von Flüssigkeiten aus Gasen, zum Trennen von Emulsionen, zum Entstauben von Abgasen, als Tropfenabscheiden, zur Entfärbung von Flüssigkeiten, zur Desinfektion von Gasen und Flüssigkeiten, zur Trinkwasseraufarbeitung, Wasserenthärtung, Abscheiden von Öl aus Gasen, Trennen von Emulsionen, zur Desodorisation in der Lebensmittelindustrie, in der chemischen Industrie, in der Pharmaindustrie, in der Automotivindustrie, in der Elektroindustrie, in der Erdölindustrie, in der Petrochemie, in der Kosmetikindustrie und im Privatbereich verwendet werden.

Weiters kann das erfindungsgemäße Produkt für Extraktionshülsen im Laborbereich und als Filter für die instrumentelle Analytik verwendet werden. Der Filterschlauch kann beispielsweise auch zu Teebeuteln und Kaffeefiltern verarbeitet werden.

Im Kosmetikbereich kann der Filterschlauch bspw. als Fingerschlauch zum Auftragen bzw. zum Abtragen von Kosmeitk (Creme, Puder,...) verwendet werden. Die cellulosen Filterschläuche können als Biologisch abbaubares Verpackungsmaterial für Obst und Gemüse im Handel verwendet werden. Durch die Wasseraufhahme der Cellulose eignet sich das erfindungsgemäße Produkt auch zur Verpackung und als Korrosionsschutz von Metallteilen für Transport und Lagerung. Im landwirtschaftlichen Bereich kann das Erfindungsgemäße Produkt verwendet werden, um Pflanzen vor mechanischen Einwirkung, Austrocknung, Insekten und Tieren zu schützen oder Nährstoffe an die Pflanze zu liefern.

Der Spinnvliesschlauch kann auch als Bandage im Therapeutischen bzw. Medizinischen Bereich eingesetzt werden, um die Muskulatur zu stützen, als Wundverband, als Stützverband, zur Feuchteregulierung und Förderung der Wundheilung.

## Patentansprüche

1. Vorrichtung zur Herstellung eines nahtlosen schlauchförmigen, cellulosischen Spinnvliesstoffes, umfassend
• eine Spinnmasseerzeugung (8),
• ein Spinnsystem (2),
• ein Koagulationssystem (4),
• einen Ablageabschnitt (3) zum Ablegen und Entwässern des Spinnvlieses,
• eine Transportvorrichtung (13, 22) zum Abtransport des Spinnvlieses in Transportrichtung,
• ein Waschsystem (5) und
• ein Trocknungssystem (6)
**dadurch gekennzeichnet, dass** der Ablageabschnitt (3) rotierbar ausgebildet ist, wobei die Rotationsachse des Ablageabschnitts (3) entlang der Transportrichtung liegt.

2. Vorrichtung nach Anspruch 1, **dadurch gekennzeichnet, dass** dem Ablageabschnitt (3) zumindest eine Absaugvorrichtung (17) zugeordnet ist.

3. Vorrichtung nach Anspruch 2, **dadurch gekennzeichnet, dass** die Absaugvorrichtung (17) zumindest abschnittsweise geneigt ist.

4. Vorrichtung nach einem der Ansprüche 1 bis 3, **gekennzeichnet durch** eine Schneideeinheit (7).

5. Verfahren zum Herstellen eines nahtlosen mehrlagigen Schlauchs aus Cellulose, wobei Cellulose zu einer Spinnmasse verarbeitet und anschließend mit einem Spinnsystem zu Filamenten extrudiert und mittels Heißluft verstreckt wird, wobei die verstreckten Filamente vor der Ablage mit einer Koagulationsflüssigkeit so benetzt werden, dass sich stellenweise Verklebungen zwischen den verstreckten Filamenten und/oder über mehrere Lagen bei der Ablage bilden, wobei anschließend die verstreckten und ggf. stellenweise verklebten Filamente auf eine rotierende Ablage abgelegt, entwässert, gewaschen und getrocknet werden.

6. Verfahren nach Anspruch 5, **dadurch gekennzeichnet, dass** das Lösungsmittel aus dem Spinnvlies ausgewaschen und zur Lösungsmittelrückgewinnung gefördert wird

7. Verfahren nach Anspruch 6, **dadurch gekennzeichnet, dass** die Prozessluft abgesaugt wird und zur Lösungsmittelrückgewinnung gefördert wird

8. Nahtloser Schlauch, bestehend aus mehreren Lagen verstreckter Cellulosefilamente, wobei die Cellulosefilamente stellenweise in jeder Lage miteinander verklebt sind und wobei die einzelnen Lagen miteinander stellenweise verklebt sind, wobei der Schlauch im Wesentlichen frei von Bindemittel ist.

9. Filter, umfassend einen Schlauch nach Anspruch 8.

10. Verwendung eines Filters gemäß Anspruch 9 zur Adsorption, der chemischen Bindung oder der Absorption von Substanzen aus Gasen, Flüssigkeiten und Emulsionen, zum Trennen von Emulsionen, zum Entstauben von Abgasen, als Tropfenabscheiden, zur Entfärbung von Flüssigkeiten, zur Desinfektion von Gasen und Flüssigkeiten, zur Trinkwasseraufarbeitung, zur Wasserenthärtung, zum Abscheiden von Öl aus Gasen, zum Trennen von Emulsionen, zur Desodorisation in der Lebensmittelindustrie, in der chemischen Industrie, in der Pharmaindustrie, in der Automotivindustrie, in der Elektroindustrie, in der Erdölindustrie, in der Petrochemie, in der Kosmetikindustrie.

## Claims

1. A device for producing a seamless tubular cellulosic spunbonded nonwoven fabric, comprising
• a spinning dope production (8),
• a spinning system (2),
• a coagulation system (4),
• a deposition section (3) for depositing and dewatering the spunbonded nonwoven,
• a transport device (13, 22) for carrying off the spunbonded nonwoven in the transport direction,
• a washing system (5) and
• a drying system (6),
**characterized in that** the deposition section (3) is designed so as to be rotatable, with the axis of rotation of the deposition section (3) lying along the transport direction.

2. A device according to claim 1, **characterized in that** at least one suction device (17) is associated to the deposition section (3).

3. A device according to claim 2, **characterized in that** the suction device (17) is inclined at least in sections.

4. A device according to any of claims 1 to 3, **characterized by** a cutting unit (7).

5. A method of producing a seamless multi-layered tube made of cellulose, wherein cellulose is processed into a spinning dope and, subsequently, is extruded with a spinning system to form filaments and is drawn by means of hot air, wherein the drawn filaments are moistened, before the deposition, with a coagulation liquid in such a way that adhesions will form in places between the drawn filaments and/or across several layers during the deposition, whereupon the drawn filaments, which optionally are stuck together in places, are deposited on a rotating tray, dewatered, washed and dried.

6. A method according to claim 5, **characterized in that** the solvent is washed out of the spunbonded nonwoven and supplied to the recovery.

7. A method according to claim 6, **characterized in that** the process air is extracted and supplied to the solvent recovery.

8. A seamless tube consisting of several layers of drawn cellulose filaments, wherein the cellulose filaments are stuck together in each layer in places and wherein the individual layers are stuck together in places, with the tube being essentially free from binders.

9. A filter comprising a tube according to claim 8.

10. The use of a filter according to claim 9 for the adsorption, chemical bonding or absorption of substances from gases, liquids and emulsions, for the separation of emulsions, for the dedusting of waste gases, as a droplet separator, for the decolorization of liquids, for the disinfection of gases and liquids, for drinking water treatment, for water softening, for separating oil from gases, for separating emulsions, for deodorization in the food industry, in the chemical industry, in the pharmaceutical industry, in the automotive industry, in the electrical industry, in the oil industry, in the petrochemistry, in the cosmetics industry.

## Revendications

1. Dispositif de fabrication d'un non-tissé filé-lié cellulosique tubulaire sans couture, comprenant
• une production de masse à filer (8),
• un système de filage (2),
• un système de coagulation (4),
• une section de dépôt (3) pour déposer et égoutter le non tissé,
• un dispositif de transport (13, 22) pour évacuer le non-tissé dans la direction de transport,
• un système de lavage (5) et
• un système de tissage (6),
**caractérisé en ce que** la section de dépôt (3) est conçue de façon rotative, l'axe de rotation de la section de dépôt (3) se trouvant le long de la direction de transport.

2. Dispositif selon la revendication 1, **caractérisé en ce qu'**au moins un dispositif d'aspiration (17) est associé à la section de dépôt (3).

3. Dispositif selon la revendication 2, **caractérisé en ce que** le dispositif d'aspiration (17) est incliné au moins par section.

4. Dispositif selon une des revendications 1 à 3, **caractérisé par** une unité de coupe (7).

5. Procédé de fabrication d'un tube multicouche sans couture en cellulose, selon lequel la cellulose est transformée en une masse à filer, puis extrudée sous forme de filaments avec un système de filage et étirée au moyen d'air chaud, selon lequel les filaments étirés sont mouillés avant le stockage avec un liquide de coagulation de telle sorte que des adhérences se forment par endroits entre les filaments étirés et/ou sur plusieurs couches lors du dépôt, et selon lequel les filaments étirés et éventuellement collés par endroits sont ensuite déposés sur un support rotatif, égouttés, lavés et séchés.

6. Procédé selon la revendication 5, **caractérisé en ce que** le solvant est extrait par lessivage du non-tissé et envoyé vers la récupération de solvant.

7. Procédé selon la revendication 6, **caractérisé en ce que** l'air de traitement est aspiré et envoyé vers la récupération de solvant.

8. Tube sans couture constitué de plusieurs couches de filaments de cellulose étirés, dans lequel les filaments de cellulose sont collés entre eux par endroits dans chaque couche et dans lequel les différentes couches sont collées entre elles par endroits, le tuyau étant sensiblement exempt de liant.

9. Filtre comprenant un tube selon la revendication 8.

10. Utilisation d'un filtre selon la revendication 9 pour l'adsorption, la liaison chimique ou l'absorption de substances provenant de gaz, de liquides et d'émulsions, pour la séparation d'émulsions, pour le dépoussiérage de gaz d'échappement, pour la séparation de gouttelettes, pour la décoloration de liquides, pour la désinfection de gaz et de liquides, pour le traitement de l'eau potable, pour l'adoucissement de l'eau, pour l'extraction d'huile de gaz, pour la séparation d'émulsions, pour la désodorisation dans l'industrie alimentaire, dans l'industrie chimique, dans l'industrie pharmaceutique, dans l'industrie automobile, dans l'industrie électrique, dans l'industrie pétrolière, dans la pétrochimie, dans l'industrie cosmétique.
